# EUROPÄISCHE PATENTANMELDUNG

(11) **EP 2 716 582 A1**
(43) Veröffentlichungstag der Anmeldung: **09.04.2014**
(21) Anmeldenummer: 13003796.3
(22) Anmeldetag: 30.07.2013
(51) Int. Cl.: B65G 65/00, B65G 65/23

(54) **Warenumschlagstation**

(30) Priorität: 04.10.2012 DE 102012109451
(71) Anmelder: Dr. Ing. h.c. F. Porsche Aktiengesellschaft, 70435 Stuttgart (DE)
(72) Erfinder: Schmidt, Felix, 72649 Wolfschlugen (DE)

(57) **Zusammenfassung**

Die vorliegende Erfindung betrifft eine Warenumschlagstation, die von einer Vorderseite und einer Rückseite her be- und entladbar ist,
- mit zumindest einer Vollgutzone und zumindest einer parallel dazu verlaufenden Leergutzone, die über eine Verbindungszone U-förmig miteinander verbunden sind,
- wobei in der Vollgutzone ein Transportrahmen mit einem aufgesetzten vollen Behälter zwischen der ersten Seite und einer gegenüberliegenden zweiten Seite verfahrbar ist, während in der Leergutzone der Transportrahmen mit leerem Behälter zwischen der zweiten Seite und der ersten Seite verfahrbar ist,
- wobei im Bereich der Verbindungszone ein Hub-Kippmodul vorgesehen ist, welches den vollen Behälter heben und/oder kippen kann und dadurch eine Entnahme von Waren aus dem Behälter erleichtert.

Hierdurch wird die Entnahme von Waren aus einem Behälter deutlich bequemer.

## Beschreibung

Die vorliegende Erfindung betrifft eine Warenumschlagstation, die von einer Vorder- und einer Rückseite her be- und entladbar ist.

Warenumschlagstationen sind aus vielen Fertigungsbereichen bekannt, wobei aus Kostengründen ein möglichst schnelles und einfaches Abladen und Umschlagen der angelieferten Waren erfolgen soll. Hierbei spielt insbesondere auch die sogenannte "Just-in-time"-Produktion eine große Rolle, bei welcher Wareneingangslager vorzugsweise gänzlich entbehrlich sind und die Anlieferung der für die Produktion erforderlichen Waren kontinuierlich und stets zum richtigen Zeitpunkt erfolgt. Durch den Wegfall großer Wareneingangslager lassen sich erhebliche Kosteneinsparungen erreichen.

Die vorliegende Erfindung beschäftigt sich mit dem Problem, insbesondere einen Warenumschlag an einer Fertigungsstraße bequemer zu machen.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, an einer bereits bekannten Warenumschlagstation, beispielsweise an einer Fertigungsstraße, an welcher Waren, insbesondere Baukomponenten, kurzfristig zwischengelagert werden, um anschließend eingebaut werden zu können, mit einem Hub-Kippmodul auszustatten, welches es ermöglicht, die in vollen Behältern angelieferten Waren anzuheben und/oder zu kippen und dadurch eine Entnahme der Waren aus dem Behälter zu erleichtern und das Arbeiten eines Werkers deutlich bequemer zu gestalten. Die erfindungsgemäße Warenumschlagstation ist dabei in bekannter Weise von einer Vorderseite und einer Rückseite her be- und entladbar und besitzt zumindest eine Vollgutzone und zumindest eine parallel dazu verlaufende Leergutzone, die über eine Verbindungszone U-förmig miteinander verbunden sind. Insbesondere erfolgt die Bereitstellung des Vollguts und die Entnahme des Leergutbehälters von der Rückseite, die Teileentnahme erfolgt von der Vorderseite. In der Vollgutzone ist ein Transportrahmen mit einem aufgesetzten vollen Behälter zwischen der Rückseite und der gegenüberliegenden Vorderseite verfahrbar, wogegen in der Leergutzone der Transportrahmen mit leerem Behälter zwischen der Vorderseite und der Rückseite verfahrbar ist. Im Bereich der Verbindungszone erfolgt ein Entnehmen der Waren, beispielsweise der einzubauenden Bauteile durch den Werker, so dass erfindungsgemäß im Bereich der Verbindungszone das zuvor erwähnt Hub-Kippmodul angeordnet ist. Mit diesem erfindungsgemäßen Hub-Kippmodul kann der Werker den Behälter so positionieren, dass er die darin gelagerten Waren, beispielsweise die für den Einbau bestimmten Teile, leicht und ergonomisch günstig entnehmen kann. Hierdurch lässt sich der Arbeitsablauf für Werker deutlich bequemer gestalten, da insbesondere ungünstige Bückbewegungen zum vollständigen Entleeren des Behälters nicht mehr erforderlich sind. Vielmehr kann mit dem Hub-Kippmodul der Behälter stets exakt so positioniert werden, auch beispielsweise durch den Werker selbst oder automatisch, dass dieser die Waren ohne größere Mühen entnehmen und anschließend einbauen kann. Eine derartige Warenumschlagstation wird beispielsweise an Fertigungsstraßen und Arbeitsplätzen im Automobilbau eingesetzt.

Zweckmäßig weist das erfindungsgemäße Hub-Kippmodul eine hydraulische Stelleinrichtung zum Anheben und/oder Kippen des Behälters auf. Mittels einer derartigen hydraulischen Stelleinrichtung sind auch größere Lasten, das heißt insbesondere volle und schwere Behälter, Paletten oder Ladungsträger vergleichsweise leicht anzuheben bzw. zu kippen. Die hydraulische Stelleinrichtung kann dabei beispielsweise eine elektrische oder manuell zu bedienende Hydraulikpumpe besitzen, wobei insbesondere die elektrische Hydraulikpumpe eine deutliche Komfortsteigerung darstellt und zudem ein vergleichsweise schnelles Verstellen des Behälters, der Palette oder des Ladungsträgers erlaubt. Eine manuell zu bedienende Hydraulikpumpe hingegen weist den großen Vorteil auf, dass diese unabhängig von einer elektrischen Spannungsversorgung ist, wodurch das erfindungsgemäße Hub-Kippmodul leichter in die Warenumschlagstation zu integrieren ist, da insbesondere kein elektrischen Anschlüsse vorgesehen werden müssen. Durch eine manuell zu bedienende Hydraulikpumpe wird zudem der die Warenumschlagstation nutzende Werker gefordert, indem er beispielsweise einen Pumphebel hin und her schwenken muss, um die Stelleinrichtung zu aktivieren. Eine derartige Schwenkbewegung stellt eine willkommene Abwechslung dar und ermöglicht durch geänderte Bewegungsabläufe die Vermeidung von Verschleißerscheinungen am menschlichen Körper, wie sie bei stets gleichen Bewegungsabläufen zu befürchten sind.

Bei einer weiteren vorteilhaften Ausführungsform der erfindungsgemäßen Lösung ist das erfindungsgemäße Hub-Kippmodul am Beginn der Leergutzone oder am Ende der Vollgutzone angeordnet. Selbstverständlich ist auch eine Anordnung des Hub-Kippmoduls sowohl zu Beginn der Leergutzone als auch am Ende der Vollgutzone möglich, wobei insbesondere die Anordnung am Ende der Vollgutzone den Vorteil bietet, dass der volle und vergleichsweise schwere Warenkorb ergonomisch günstig in Bezug auf den Werker positioniert werden kann. Rein theoretisch kann sich selbstverständlich das erfindungsgemäße Hub-Kippmodul auch über die gesamte Verbindungszone erstrecken, so dass unabhängig von der Stellung der Transportrahmens mit dem Behälter diese im Bereich der Verbindungszone angehoben und/oder gekippt werden können.

Bei einer vorteilhaften Weiterbildung der erfindungsgemäßen Lösung ist das Hub-Kippmodul in der Lage zumindest ein Gewicht von ca. 850 kg anzuheben und gegebenenfalls zu kippen. Bei schweren einzubauenden Komponenten, wie beispielsweise Wasserpumpen, kann bei einem befüllten Behälter schnell ein Gewicht erreicht werden, welches mehrere hundert Kilo betragen kann. Durch eine entsprechende Dimensionierung der erfindungsgemäßen Stelleinrichtung wird ermöglicht, dass diese in der Lage ist, den Behälter samt darin angeordneter Waren, das heißt Baukomponenten, und Transportrahmen anzuheben und gegebenenfalls zu kippen. Das Hub-Kippmodul ermöglicht dabei ein Kippen des Behälters um ca. 10-45°, vorzugsweise um ca. 35°. Durch einen derartigen Kippwinkel bezogen auf eine Horizontale kann einem an der Warenumschlagstation arbeitenden Werker ein besonders einfaches und bequemes Entnehmen der Waren aus dem Behälter ermöglicht werden, wobei der Transportrahmen und/oder der Behälter selbstverständlich derart am Hub-Kippmodul befestigt sind, dass diese auch bei einem Kippen um bis zu 45° nicht Gefahr laufen, von dem Hub-Kippmodul abzurutschen und dadurch die im Behälter gelagerten Waren oder gar einen Werker zu gefährden. Hierbei ist beispielsweise denkbar, dass am Hub-Kippmodul ein entsprechender Halter vorgesehen ist, der ein Herabrutschen des Transportrahmens und des darin abgestellten Behälters auch bei einem Kippen verhindert.

Bei einer vorteilhaften Ausführungsform der erfindungsgemäßen Lösung ist das Hub-Kippmodul am Ende der Vollgutzone angeordnet und zusätzlich sind im Bereich der Verbindungszone federbeaufschlagte Lager, insbesondere Kugellager, vorgesehen, die ausschließlich ein Verschieben eines leeren Transportrahmens, das heißt eines Transportrahmens mit einem darauf abgestellten leeren Behälter, erlauben. Ein nicht geleerter Behälter hingegen ist so schwer, dass die federbeaufschlagten Lager, insbesondere die Kugellager, niedergedrückt werden und dadurch ein Verschieben des Transportrahmens verhindern. Sämtliche Zonen, das heißt die Vollgutzone, die Leergutzone und die Verbindungszone sind üblicherweise eben ausgebildet, wodurch ein leichtes Verfahren selbst gefüllter Behälter ermöglicht wird.

Bei einer weiteren vorteilhaften Ausbildung der erfindungsgemäßen Lösung sind zumindest in der Vollgutzone und in der Leergutzone Führungsschienen angeordnet, in denen der Transportrahmen geführt ist. Dies ermöglicht eine besonders exakte und präzise Führung des Transportrahmens und damit auch der angelieferten Waren. In Richtung der Rückseite können dabei die Führungsschienen der Vollgutzone aufgeweitet sein, wodurch eine Übergabe eines vollen Transportrahmens von beispielsweise einem Kommissionierwagen an die Vollgutzone vereinfacht wird.

Zweckmäßig ist zudem eine Verstelleinrichtung vorgesehen, mit welcher der Transportrahmen zusammen mit dem leeren Behälter in der Leergutzone von der Vorderseite zur Rückseite beförderbar ist. Eine derartige Verstelleinrichtung kann beispielsweise mittels eines Fußpedals, das auf eine Zackenleiste wirkt, betätigt werden und muss aufgrund des leeren Transportrahmens nicht besonders stark ausgebildet sein. Die Verstelleinrichtung gewährleistet, dass der leere Transportrahmen selbständig und damit äußerst einfach von der Vorderseite zur Rückseite der Warenumschlagstation entlang der Leergutzone verstellt wird und dort einfach wieder beispielsweise von einem Kommissionierwagen entnommen oder neu befüllt werden kann. Eine ähnliche Verstelleinrichtung kann auch im Bereich der Vollgutzone angeordnet werden, mit Hilfe welcher der Innentransportrahmen leichtgängig entlang der Vollgutzone der Warenumschlagstation befördert werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch
- Fig. 1: unterschiedliche Ansichten auf eine erfindungsgemäße Warenumschlagstation,
- Fig. 2a-d: ein erfindungsgemäßes Hub-Kippmodul in unterschiedlichen Hub-Kippstellen,
- Fig. 3: eine Ansicht auf ein erfindungsgemäßes Hub-Kippmodul.

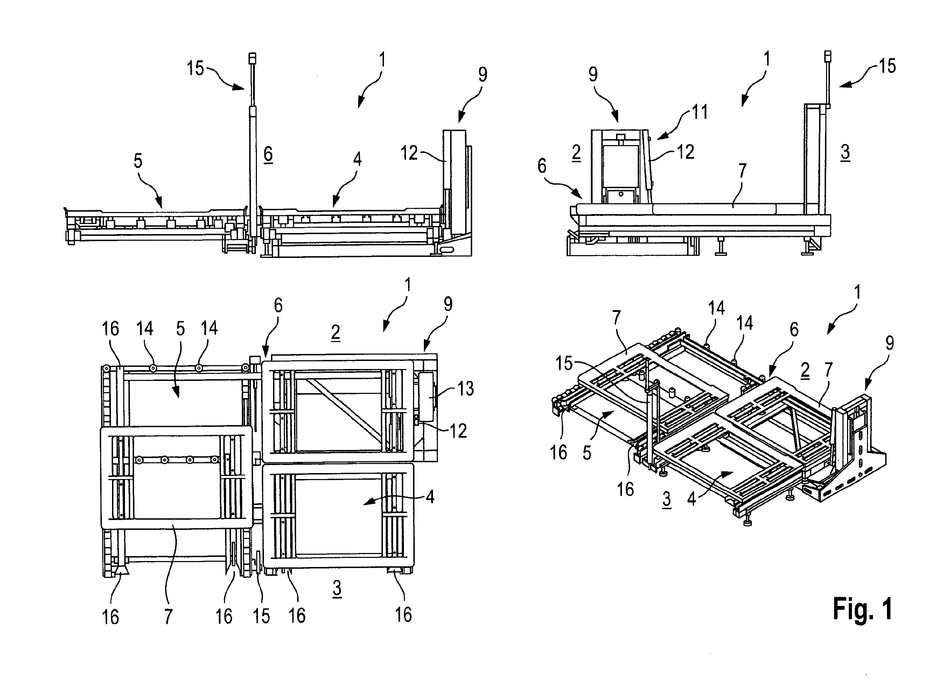

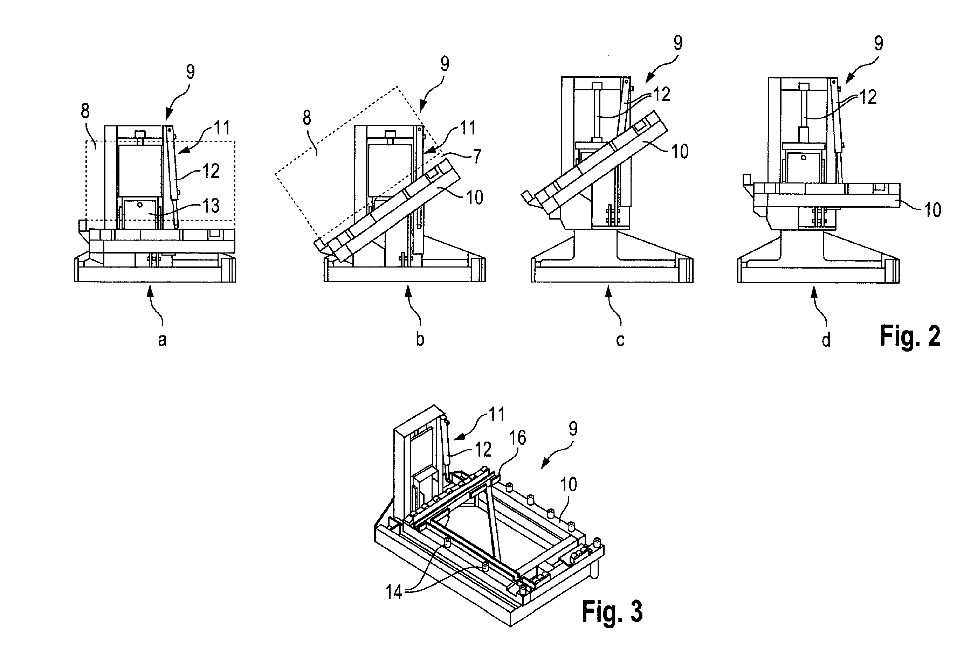

Entsprechend der Figur 1 weist eine erfindungsgemäße Warenumschlagstation 1 eine Vorderseite 2 sowie eine Rückseite 3 auf, wobei die Warenumschlagstation 1 üblicherweise von der Rückseite 3 aus be- und von der Vorderseite 2 aus entladen (Teileentnahme) wird. Des Weiteren weist die erfindungsgemäße Warenumschlagstation 1 zumindest eine Vollgutzone 4 und eine parallel dazu verlaufende Leergutzone 5 auf, die über eine Verbindungszone 6 U-förmig miteinander verbunden, wobei sich die Verbindungszone 6 entlang der Vorderseite 2 erstreckt. In der Vollgutzone 4 wird somit ein beispielsweise von einem nicht gezeigten Bereitstellwagen angelieferter Transportrahmen 7 mit einem aufgesetzten und vollen Behälter 8 zwischen der Rückseite 3 und der gegenüberliegenden Vorderseite 4 verfahren, während in der Leergutzone 5 der Transportrahmen 7 mit leerem Behälter 8 zwischen der Vorderseite 2 und der Rückseite 3 wieder zurück verfahren wird. Im Bereich der Verbindungszone 6, vorzugsweise am Ende der Vollgutzone 4, ist ein erfindungsgemäßes Hub-Kippmodul 9 vorgesehen, welches in der Lage ist, den vollen Behälter 8 zusammen mit dem Transportrahmen 7 zu heben und/oder zu kippen und dadurch eine Entnahme von Waren aus dem Behälter 8 zu erleichtern. Selbstverständlich kann das erfindungsgemäße Hub-Kippmodul 9 auch am Beginn der Leergutzone 5 angeordnet sein. Das erfindungsgemäße Hub-Kippmodul 9 ist in einer Ansicht in Figur 3 dargestellt und in unterschiedlichsten Hub-Kippstellungen in den Figuren 2a-2d.

Gemäß der Figur 2a befindet sich Hub-Kippmodul 9 in seiner Ausgangsstellung, in welches es fluchtend zur Vollgutzone 4, zur Leergutzone 5 bzw. zur Verbindungszone 6 angeordnet ist. Gemäß der Figur 2b ist das Hub-Kippmodul 9 mit gekippter Plattform 10 dargestellt, wogegen es gemäß der Figur 2c sowohl mit angehobener als auch mit gekippter Plattform 10 gezeichnet ist. In der Figur 2d ist die Plattform 10 waagerecht, jedoch im Vergleich zur Figur 2a angehoben. Durch die Möglichkeit mit dem erfindungsgemäßen Hub-Kippmodul 9 den darauf abgestellten Transportrahmen 7 sowie einen vollen Behälter 8 sowohl anzuheben als auch zu kippen, kann eine Entnahme der darin aufbewahrten Waren für einen Werker ergonomisch deutlich günstiger gestaltet werden, wodurch eine Entnahme der Waren deutlich bequemer und leichter für den Werker ist.

Um die Plattform 10 des Hub-Kippmoduls 9 anheben bzw. kippen zu können, weist das Hub-Kippmodul 9 eine hydraulische Stelleinrichtung 11 mit entsprechenden Hydraulikzylindern 12 auf. Zur Beaufschlagung der Hydraulikzylinder 12 mit Hydrauliköl besitzt die hydraulische Stelleinrichtung 11 eine elektrische oder manuell zu bedienende Hydraulikpumpe 13, wobei insbesondere die manuell zu bedienende Hydraulikpumpe 13 den großen Vorteil bietet, keine elektrischen Anschlüsse vorhalten zu müssen und zudem eine abwechslungsreiche Zusatzbewegung für den Werker bereitstellen zu können.

Betrachtet man die Figur 1, so kann man erkennen, dass das Hub-Kippmodul 9 am Ende der Vollgutzone 4 angeordnet ist, wobei im Bereich der Verbindungszone 6 federbeaufschlagte Lager 14 vorgesehen sein können, insbesondere Kugellager, die ausschließlich ein Verschieben eines entleerten Behälters 8 erlauben. Der Werker muss in diesem Fall also zunächst den Behälter 8 vollständig entleeren bzw. zumindest nahezu vollständig, um ihn entlang der Verbindungszone 6 zur Leergutzone 5 und von dort von der Vorderseite 2 wieder zur Rückseite 3 verschieben zu können. Hierbei ist das Hub-Kippmodul 9 dann am Ende der Vollgutzone 4 angeordnet. Ebenso vorgesehen sein kann eine Verstelleinrichtung 15, mit welcher der Transportrahmen 7 zusammen mit dem leeren Behälter 8 in der Leergutzone 5 von der Vorderseite 2 zur Rückseite 3 beförderbar ist, wobei selbstverständlich eine derartige Verstelleinrichtung 15 auch auf einen in der Vollgutzone 4 abgestellten Transportrahmen 7 mit darauf aufgenommenem Behälter 8 einwirken kann und diesen, beispielsweise mittels einer entsprechend verstellbaren Zackenleiste, leicht entlang der Vollgutzone 4 bzw. der Leergutzone 5 verstellen.

Um auch den Einbau von schweren Bauteilen möglichst ergonomisch günstig bewerkstelligen zu können, ist das erfindungsgemäße Hub-Kippmodul 9 in der Lage, zumindest ein Gewicht von ca. 850 kg anzuheben und gegebenenfalls zu kippen. Das Hub-Kippmodul 9 ermöglicht darüber hinaus ein Kippen der Plattform 10 und damit des Behälters 8 um 10-45° zur Horizontalen, vorzugsweise um ca. 35°, wodurch ein einfaches und bequemes Entnehmen der im Behälter 8 gelagerten Waren ermöglicht wird.

Zumindest in der Vollgutzone 4 und in der Leergutzone 5 sind darüber hinaus Führungsschienen 16 angeordnet, in welchen der Transportrahmen 7 geführt ist und dadurch ein leichtes und gerichtetes Führen des Behälters 8 ermöglicht. Die Führungsschienen 16 sind dabei in der Vollgutzone 4 in Richtung der Rückseite 3 aufgeweitet, so dass ein Einstellen eines einen vollen Behälter 8 tragenden Transportrahmens 7, beispielsweise von einem Kommissionierwagen herab, erleichtert wird.

Die Erfindung betrifft jedoch nicht nur die gesamte Warenumschlagsstation 1, sondern auch ein einzelnes Hub-Kippmodul 9, wie dies beispielsweise gemäß der Figur 3 dargestellt ist. Ein derartiges individuelles Hub-Kippmodul 9 kann beispielsweise bei einer in der Art eines Baukastensystems aufgebauten Warenumschlagstation 1 einfach integriert werden.

Mit dem erfindungsgemäßen Hub-Kippmodul 9 und mit der erfindungsgemäßen Warenumschlagstation 1 lässt sich für einen Werker ein ergonomisch besonders günstiges, bequemes und dadurch angenehmes Arbeiten erreichen.

## Patentansprüche

1. Warenumschlagstation (1), die von einer Vorderseite (2) und einer Rückseite (3) her be- und entladbar ist,
- mit zumindest einer Vollgutzone (4) und zumindest einer parallel dazu verlaufenden Leergutzone (5), die über eine Verbindungszone (6) U-förmig miteinander verbunden sind,
- wobei in der Vollgutzone (4) ein Transportrahmen (7) mit einem aufgesetzten vollen Behälter (8) zwischen der Rückseite (3) und der gegenüberliegenden Vorderseite (2) verfahrbar ist, während in der Leergutzone (5) der Transportrahmen (7) mit leerem Behälter (8) zwischen der Vorderseite (2) und der Rückseite (3) verfahrbar ist,
- wobei im Bereich der Verbindungszone (6) ein Hub-Kippmodul (9) vorgesehen ist, welches den Behälter (8) heben und/oder kippen kann und dadurch eine Entnahme von Waren aus dem Behälter (8) erleichtert.

2. Warenumschlagstation nach Anspruch 1, **dadurch gekennzeichnet, dass** das Hub-Kippmodul (9) eine hydraulische Stelleinrichtung (11) zum Anheben und/oder Kippen des Behälters (8) aufweist.

3. Warenumschlagstation nach Anspruch 2, **dadurch gekennzeichnet, dass** die hydraulische Stelleinrichtung (11) eine elektrische oder manuell zu bedienende Hydraulikpumpe (13) aufweist.

4. Warenumschlagstation nach einem der Ansprüche 1 bis 3, **dadurch gekennzeichnet, dass** das Hub-Kippmodul (9) am Beginn der Leergutzone (5) oder am Ende der Vollgutzone (4) angeordnet ist.

5. Warenumschlagstation nach einem der Ansprüche 1 bis 4, **dadurch gekennzeichnet, dass** das Hub-Kippmodul (9) am Ende der Vollgutzone (4) angeordnet ist und im Bereich der Verbindungszone (6) federbeaufschlagte Lager (14), insbesondere Kugellager, vorgesehen sind, die ausschließlich ein Verschieben eines Transportrahmens (7) mit leerem oder nahezu leerem Behälter (8) erlauben.

6. Warenumschlagstation nach einem der vorhergehenden Ansprüche, **dadurch gekennzeichnet, dass** eine Verstelleinrichtung (15) vorgesehen ist, mit welcher der Transportrahmen (7) zusammen mit dem leeren Behälter (8) in der Leergutzone (5) von der Vorderseite (2) zur Rückseite (3) beförderbar ist und/oder dass eine Verstelleinrichtung (15) vorgesehen ist, mit welcher der Transportrahmen (7) zusammen mit dem vollen Behälter (8) in der Vollgutzone (4) von der Rückseite (3) zur Vorderseite (2) beförderbar ist.

7. Warenumschlagstation nach einem der vorhergehenden Ansprüche, **dadurch gekennzeichnet, dass** das Hub-Kippmodul (9) zumindest ein Gewicht von 850 kg anheben und ggf. kippen kann.

8. Warenumschlagstation nach einem der vorhergehenden Ansprüche, **dadurch gekennzeichnet, dass** das Hub-Kippmodul (9) ein Kippen des Behälters (8) um 10 - 45°, vorzugsweise um ca. 35° ermöglicht.

9. Warenumschlagstation nach einem der Ansprüche 1 bis 8, **dadurch gekennzeichnet, dass** zumindest in der Vollgutzone (4) und in der Leergutzone (5) Führungsschienen (16) angeordnet sind, in welchen der Transportrahmen (7) geführt ist, wobei die Führungsschienen (16) der Vollgutzone (4) in Richtung der Rückseite (3) aufgeweitet sind, so dass ein Einstellen eines einen vollen Behälter (8) tragenden Transportrahmens (7) erleichtert wird.

10. Hub-Kippmodul (9) zum Einbau in eine Warenumschlagstation (1) nach einem der vorhergehenden Ansprüche, wobei das Hub-Kippmodul (9) einen Behälter (8) heben und/oder kippen kann und dadurch eine Entnahme von Waren aus dem Behälter (8) erleichtert.
